(19) **Europäisches Patentamt / European Patent Office / Office européen des brevets**

(11) **EP 3 482 901 B1**

(12) **EUROPEAN PATENT SPECIFICATION**

(45) Date of publication and mention
of the grant of the patent:
**04.08.2021 Bulletin 2021/31**

(51) Int Cl.:
*B33Y 70/00* (2020.01)   *B29B 9/12* (2006.01)
*B29B 9/16* (2006.01)   *B29B 9/06* (2006.01)
*B29C 64/153* (2017.01)

(21) Application number: **18201784.8**

(22) Date of filing: **22.10.2018**

(54) **RESIN POWDER FOR SOLID FREEFORM FABRICATION**

HARZPULVER FÜR DIE 'SOLID FREE FORM' HERSTELLUNG

POUDRE DE RÉSINE POUR LA FABRICATION DE FORME LIBRE SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2017 JP 2017216021
09.07.2018 JP 2018129626**

(43) Date of publication of application:
**15.05.2019 Bulletin 2019/20**

(73) Proprietor: **Ricoh Company, Ltd.
Tokyo 143-8555 (JP)**

(72) Inventors:
• **IWATSUKI, Hitoshi
Ohta-ku, Tokyo 143-8555 (JP)**
• **YAMASHITA, Yasuyuki
Ohta-ku, Tokyo 143-8555 (JP)**
• **NARUSE, Mitsuru
Ohta-ku, Tokyo 143-8555 (JP)**
• **SAITO, Akira
Ohta-ku, Tokyo 143-8555 (JP)**

• **AMAN, Yasutomo
Ohta-ku, Tokyo 143-8555 (JP)**
• **HIGUCHI, Shinzo
Ohta-ku, Tokyo 143-8555 (JP)**
• **Iida, Sohichiroh
Ohta-ku, Tokyo 143-8555 (JP)**
• **KAMODA, Kiichi
Ohta-ku, Tokyo, 143-8555 (JP)**
• **MUTOH, Toshiyuki
Ohta-ku, Tokyo, 143-8555 (JP)**
• **ISEKI, Toshiyuki
Ohta-ku, Tokyo 143-8555 (JP)**

(74) Representative: **White, Duncan Rohan
Marks & Clerk LLP
Fletcher House (2nd Floor)
Heatley Road
The Oxford Science Park
Oxford OX4 4GE (GB)**

(56) References cited:
**US-A1- 2009 017 395   US-A1- 2009 190 959
US-B2- 8 652 278**

**Description**

BACKGROUND

Technical Field

The present invention relates to a resin powder for solid freeform fabrication, a device for manufacturing a solid freeform fabrication object, and a method of manufacturing a solid freeform fabrication object.

Description of the Related Art

A powder bed fusion (PBF) method is known as a method of manufacturing a solid freeform fabrication object (three-dimensional object). The PBF method includes a selective a laser sintering (SLS) method to form a solid freeform fabrication object by selective irradiation of laser beams and a selective mask sintering (SMS) method in which laser beams are applied in a planar manner using a mask. In addition, known methods of manufacturing solid freeform fabrication objects other than the PBF method include a high speed sintering (HSS) method using ink, a binder jetting (BJ) method, etc.

As a resin powder for use in manufacturing a solid freeform fabrication object, for example, a resin melt liquid is extruded and thereafter drawn to form a resin fiber, which is fixed with a movable clamp and moved toward a cutting blade, where the resin fiber is cut to obtain resin powder having a substantially cylindrical resin powder (WO 2017/112723 A1).

US2009/190959 A1 discloses cylindrical toner particles.

However, this resin powder is disadvantageous in terms of smoothness of the surface of a solid freeform fabrication object formed using the resin powder and flowability thereof.

SUMMARY

The resin powder for solid freeform fabrication object enhances smoothness of the surface of a solid freeform fabrication object formed using the resin powder and flowability of the resin powder.

The invention provides a resin powder as claimed in claim 1, a system including the powder and a device, a method of making a solid freeform fabrication object using the powder, and a method of manufacturing the powder.

BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a photograph illustrating an example of resin powder for solid freeform fabrication;

FIG. 2 is a schematic diagram illustrating an example of resin powder having a substantially flat portion formed by cutting a cylindrical resin in a diagonal direction.

FIG. 3A is a diagram illustrating a schematic perspective view of an example of powder A particle having a cylindrical form;

FIG. 3B is a diagram illustrating a side view of an example of the powder A particle having a cylindrical form illustrated in FIG. 3A;

FIG. 3C is a diagram illustrating a side view of an example of the powder A particle having a cylindrical form without a point at ends;

FIG. 3D is a diagram illustrating a side view of an example of the powder A particle having a cylindrical form without a point at ends;

FIG. 3E is a diagram illustrating a side view of an example of the powder A particlehaving a cylindrical form without a point at ends;

FIG. 3F is a diagram illustrating a side view of an example of the powder A particle having a cylindrical form without a point at ends;

FIG. 3G is a diagram illustrating a side view of an example of the powder A particle having a cylindrical form without a point at ends;

FIG. 3H is a diagram illustrating a side view of an example of the powder A particle having a cylindrical form without a point at ends;

FIG. 3I is a diagram illustrating a side view of an example of the powder A particle having a cylindrical form without a point at ends;
FIG. 4 is a schematic diagram illustrating a device for manufacturing a solid freeform fabrication object according to an embodiment of the present disclosure;
FIGs. 5A and 5B are conceptual diagrams illustrating an example of the method of manufacturing a solid freeform fabrication object; and
FIGs. 6A and 6B are conceptual diagrams illustrating an example of the method of manufacturing a solid freeform fabrication object.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.
Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.
For the sake of simplicity, the same reference number will be given to identical constituent elements such as parts and materials having the same functions and redundant descriptions thereof omitted unless otherwise stated.
As the resin powder, for example, a semi-aromatic polyamide resin composition for use in fused deposition modeling (FDM) utilizing laser irradiation has been proposed.
In the method of selectively melting resin powder for solid freeform fabrication to fabricate an object, the resin powder for solid freeform fabrication not melted in the fabrication process is recycled in some occasions.
However, the use of such recycled solid freeform fabrication resin powder for fabrication causes surface deficiency referred to as orange peel such as coarse surface, voids, and distortion or degradation of tensile strength of an obtained fabrication object.
Embodiments of the present disclosure are described in detail below, but the present disclosure is not limited thereto.
Next, one embodiments of the present disclosure is described. The resin powder described below is just an example and the present disclosure is not limited thereto. Therefore, the resin powder of the present disclosure may be used for a surface shrinkage agent, a spacer, a lubricant, a paint, a grinding stone, an additive, a secondary battery separator, foods, cosmetics, clothes, automobiles, precision instruments, semiconductors, aerospace, medicine, metal substitute material, etc.

Resin Powder

The resin powder for solid freeform fabrication of the embodiment as an example of the resin powder includes a substantially flat portion and a ratio (Y/X) of Y in $\mu$m to X in $\mu$m of from 0.5 to 1.0, where X and Y respectively represent a diameter of a circle having an area equivalent to a projected area of the resin powder and a diameter of a circle having an area equivalent to a projected area of a substantially flat portion of the resin powder in a projected image of the resin powder obtained by a scanning electron microscope, wherein a ratio (Dy/Dn) of the number average surface diameter Dy in $\mu$m of the powder A to a number average particle diameter Dn in $\mu$m of the resin powder is from 0.50 to 1.50, where Dy represents the average on number basis of YA in $\mu$m each of which is a diameter of a circle having an area equivalent to a projected area of the substantially flat portion of the powder A in a projected image of the resin powder obtained by a scanning electron microscope.
The resin powder for solid freeform fabrication is an aggregate of a plurality of resin powders. The resin powder may contain powder other than the powder A. The proportion of the powder A based on the resin powder for solid freeform fabrication is preferably from 50 to 100 percent by mass, more preferably from 75 to 100 percent by mass, and particularly preferably from 85 to 100 percent by mass.

Number Average Particle Diameter Dn

The number average particle diameter Dn of the resin powder for solid freeform fabrication containing the powder A described later in detail is preferably from 45 to 110 $\mu$m and more preferably from 45 to 70 $\mu$m.

When it is from 45 to 110 $\mu$m, it is possible to reduce the proportion of excessively fine powder in the whole of the resin powder for solid freeform fabrication, so that the obtained resin powder has small variation in size and has excellent flowability.

The ratio (Dv/Dn) of the volume average particle diameter (Dv) to the number average particle diameter (Dn) in the resin powder for solid freeform fabrication is preferably 2.00 or less, more preferably 1.50 or less, and particularly preferably 1.20 or less in terms of improvement of fabrication accuracy of a solid freeform fabrication object.

The number average particle diameter Dn can be measured using, for example, a particle size distribution measuring device (F-PIA 3000, manufactured by Sysmex Corporation), and the volume average particle diameter Dv can be measured with, for example, a particle size distribution measuring device (microtrac MT 3300 EXII, manufactured by MicrotracBEL Corp).

Powder A

Substantially Flat Portion

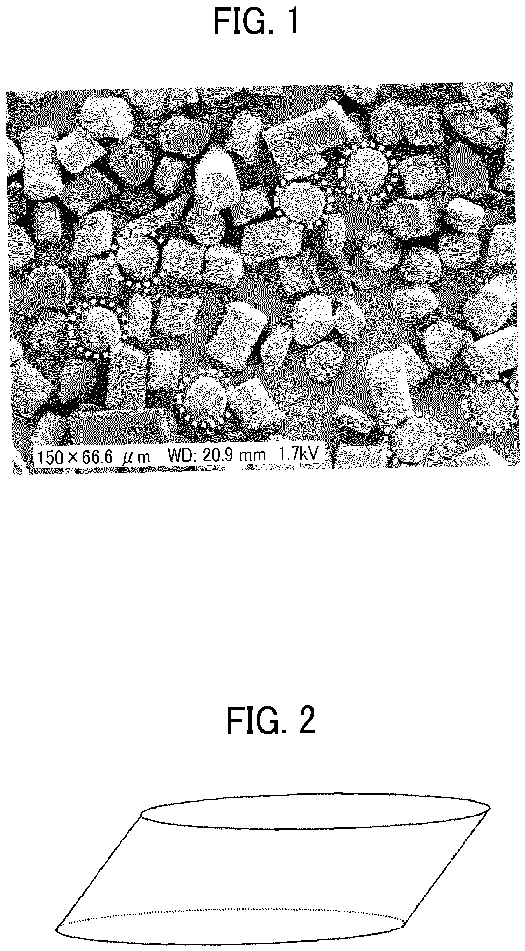

The powder A satisfies particular conditions and is a resin powder. The powder A is described with reference to FIG. 1. FIG. 1 is a photograph illustrating an example of resin powder for solid freeform fabrication. In addition, the resin powder particles for solid freeform fabrication surrounded by a dotted circle in FIG. 1 are a part of a plurality of particles of powder A existing in FIG. 1. The photograph of the resin powder solid freeform fabrication is taken by a scanning electron microscope (SEM). In the following description, scanning electron microscope (SEM) is used as just an example to obtain a projected image. Projected images can be obtained by not only an SEM but also a known image analyzer such as an optical microscope.

As illustrated in FIG. 1, each particle of powder A has a substantially flat portion. The powder A particle having a flat portion forms the surface of a solid freeform fabrication object obtained by using the resin powder for solid freeform fabrication of this embodiment, so that the obtained solid freeform fabrication object has an excellent surface smoothness.

The substantially flat portion is not necessarily perfectly flat if the substantially flat portion is capable of forming a solid freeform fabrication object having an excellent surface smoothness. It may partially have a convex and concave portion. However, the substantially flat portion needs to be distinguished from a surface other than the substantially flat portion of the particles of powder A. For example, it does not include a curved surface of a substantially spherical three-dimension form manufactured by a polymerization method. The resin powder prepared by a polymerization method forms the surface of a solid freeform fabrication object at which resin powder having non-flat surface is disposed. Therefore, the obtained solid freeform fabrication object is inferior regarding smoothness of the surface.

In addition, the substantially flat portion preferably has a substantially circular form in a projected image of the powder A particle obtained by an SEM. The substantially circular form includes, for example, a form such as a true circle and an ellipse. A true circle form is preferable. The exterior portion of the substantially circular form may partially miss. The substantially circular form has a ratio of the major axis to the minor axis of from 1 to 10.

The substantially flat portion preferably has a circularity of 0.85 or greater. Circularity is obtained by the following relation, where S represents an area of the substantially flat portion and L represents the circumferential length of the substantially flat portion.

$$\text{Circularity} = 4\pi S/L^2$$

When the powder A particles have a substantially cylindrical form, as the circularity of the powder A particles in a projected image increases, flowability of the powder increase. Therefore, when the powder A is observed from above, the proportion of the projected area of the substantially flat portion in the projected image of the powder A particles increases. In addition, as the circularity of the powder A particles in the projected image increases, the powder A can be uniformly and densely disposed. As a result, the flat portion of the powder A easily forms the surface of a solid freeform fabrication object, which makes it possible to obtain a solid freeform fabrication object having an excellent surface smoothness.

Ratio (Y/X)

The powder A particles satisfy the following condition 1 regarding the ratio (Y/X).

Condition 1

In an image of resin powder obtained by a scanning electron microscope (SEM), the ratio (Y/X) of the diameter Y in μm of a circle having an area equivalent to a projected area of the substantially flat portion of the resin powder particle to the diameter X in μm of a circle having an area equivalent to a projected area of the resin powder particle is from 0.5 to 1.0.

When the ratio Y/X is from 0.5 to 1.0 and the resin powder particle is observed from above, the ratio of the projected area of the substantially flat portion to the projected area of the resin powder particle increases. That is, when the surface of a solid freeform fabrication object using a resin powder is observed from above, the resin powder has an increased ratio of the projected area of the substantially flat portion to the projected area of the resin powder. Therefore, when the ratio (Y/X) is from 0.5 to 1.0, the flat portion of the resin powder particle tends to form the surface of a solid freeform fabrication object, so that the solid freeform fabrication object has an excellent surface smoothness. The resin powder is one of the resin powder contained in the resin powder for solid freeform fabrication in an image obtained by an SEM.

However, for example, for a resin powder particle having a substantially cylindrical form and having a substantially flat portion, if it is excessively long in height in comparison with the diameter of the substantially flat portion (base and top surface), which is also referred to as a stick-like form, the powder particle having such a form normally does not stand with the substantially flat portion upward but falls down (for example, a powder enclosed with a solid line in FIG. 1). Therefore, most of the powder having a stick-like form falls down with the side (not the substantially flat portion) of the significantly cylindrical form upward. That is, the powder particles having a ratio (Y/X) of from 0.5 to 1.0 never or few exists in the powder having a stick-like form.

A specific calculation method of the ratio Y/X is as follows. A resin powder for solid freeform fabrication disposed on a flat plate is photographed with a scanning electron microscope (SEM) with a magnifying power of 150 ×. Next, the projected area of the photographed resin powder particle and the projected area of one substantially flat portion thereof are obtained. Next, the diameter X in μm of a circle having an area equivalent to the projected area of the resin powder particle and the diameter Y in μm of a circle having to an area equivalent to the projected area of the substantially flat portion are calculated to obtain the ratio Y/X. The "area equivalent to" is described next. For example, as illustrated in FIG. 1, the substantially flat portion of the predetermined resin powder may take a distorted form other than a true circle. Therefore, it is difficult to calculate the area in a single uniform way in some cases. Therefore, the area equivalent to is used instead. The magnifying power of the SEM is suitably changed in accordance with the size of the particles of the powder for solid freeform fabrication. The projected area in the present disclosure means an area of a projected image on a plane, specifically speaking, the area calculated from the SEM image. To be more specific, it means the area observed from the vertical direction of the disposed surface of a sample (resin powder for solid freeform fabrication).

The powder particles produced by the crushing method may have a crushed surface having a substantially flat portion. However, the projected area of one crushed surface is small and does not satisfy the ratio Y/X specified above. When the resin powder produced by the crushing method is used, each powder particle takes its own solid form and there are large variations in particle size, so that the obtained solid freeform fabrication object is inferior with regard to smoothness. In addition, due to the large variations in particle size, flowability of the resin powder deteriorates. In addition, the powder particles produced by the polymerization method does not satisfy the ratio X/Y specified above because it does not also have a smooth surface, either.

In the present disclosure, the powder A is not defined as the powder having particles with a substantially flat portion, but having a substantially flat portion and a ratio (Y/X) of from 0.5 to 1.0 at the same time.

Number Average Surface Diameter Dy

The powder A contained in the resin powder for solid freeform fabrication preferably has a number average surface diameter Dy in μm of from 40.0 to 100.0 μm. The number average surface diameter Dy is obtained from the diameter $Y_A$ in μm of each circle equivalent to each projected area of the substantially flat portion in the powder A in the projected image. Specifically speaking, it is obtained in the following manner.

Condition 2

For the powder A in an image obtained by a scanning electron microscope (SEM), a diameter $Y_A$ in μm of a circle having the area equivalent to a projected area of the substantially flat portion of each particle of the powder A is calculated to calculate the number average surface diameter Dy of the powder A on number basis.

When the number average surface diameter Dy is 40.0 μm or greater, it is possible to reduce the proportion of excessively fine powder having a substantially flat portion so that the obtained powder A has a small variation in size and the obtained resin powder has excellent flowability. In addition, when the number average surface diameter Dy is

100.0 μm or less, for example, it is possible to reduce the proportion of a resin powder having an excessively large substantially flat portion formed by cutting a resin powder having a cylindrical form in a diagonal direction as illustrated in FIG. 2. As a result, the powder A having less variations in form is obtained, which makes it possible to obtain a solid freeform fabrication object having an excellent surface smoothness and a resin powder for solid freeform fabrication having an excellent flowability.

A specific calculation method of the number average surface diameter Dy is as follows. A resin powder for solid freeform fabrication disposed on a flat plate is photographed with a scanning electron microscope (SEM) with a magnifying power of 150 ×. Next, from the resin powder for solid freeform fabrication in the photographed image, resin powder corresponding to the powder A is determined. Next, in the resin powder determined as the powder A, the diameter $Y_A$ of a circle having an area equivalent to the projected area of the substantially flat portion is calculated for each of the powder A and the sum of the calculated diameters $Y_A$ is divided by the number of the powder A to obtain the number average surface diameter Dy. The number of the powder A for use in the calculation of the number average surface diameter Dy is 100 or more. The magnifying power of the SEM is suitably changed in accordance with the size of the powder for solid freeform fabrication.

In addition, in the distribution of the diameter $Y_A$ calculated in the condition 2, the integrated value as the sum of the number of the powder A having a diameter $Y_A$ of 2.0 μm or less is preferably 20.0 percent or less and more preferably 10.0 percent or less to the total number of the powder A.

When the proportion is 20.0 percent or less, it is possible to reduce the proportion of excessively fine powder having a substantially flat portion so that the obtained powder A has a small variation in size and the obtained resin powder has excellent flowability. In addition, when it is 20.0 percent or less and the resin powder for solid freeform fabrication is supplied to a site where a solid freeform fabrication object is manufactured by a supplying device such as a supplying roller and a blade, it is possible to reduce cohesion of the resin powder for solid freeform fabrication to the supplying device, which makes it possible to uniformly supply resin powder.

Ratio Dy/Dn

The ratio Dy/Dn of the number average surface diameter Dy of the powder A and the number average particle diameter Dn of the resin powder for solid freeform fabrication is from 0.50 to 1.50 and preferably from 0.70 to 1.20.

When the ratio Dy/Dn is 0.50 or greater, it is possible to reduce the proportion of excessively fine powder having a substantially flat portion so that the obtained powder A has a small variation in size and the obtained resin powder has excellent flowability. In addition, when the ratio Dy/Dn is 0.50 or more, the powder A particles can have a sufficiently large substantially flat portion, whereby the surface of the solid freeform fabrication object becomes uniform, thereby preferably improving smoothness.

When the ratio Dy/Dn is 1.50 or less, it is possible to reduce the proportion of excessively fine powder in the whole of the resin powder for solid freeform fabrication so that the obtained resin powder has small variation in size and has excellent flowability. In addition, when the ratio Dy/Dn is 1.50 or less, the powder A particle does not have a flattened shape, so that adhesion and aggregation of the powder A can be reduced. This makes it possible to reduce the occurrence of streaks, etc. when supplying the resin powder for solid freeform fabrication to the fabrication area of a solid freeform fabrication object, thereby preferably enhancing smoothness.

Since Dn increases in a case where the powder has a stick-like form as described above, it is unlikely that the ratio Dy/Dn is 0.50 or more.

Solid Form of Powder A

The powder A particle preferably has a columnar form. The ratio of the height of a columnar form to the length of the longest straight line drawn on the bottom surface thereof is preferably from 0.8 to 2.0 times, more preferably from 0.8 to 1.8 times, and more preferably from 0.8 to 1.5 times. When the ratio of the height is from 0.8 to 1.5 times, the powder A particle is easily disposed with its substantially flat portion upward as if coins were scattered on a table. The substantially flat portion tends to form the surface of a solid freeform fabrication object, so that the solid freeform fabrication object tends to have excellent surface smoothness.

There is no specific limit to the columnar form. It can be suitably selected to suit to a particular application. For example, a substantially cylindrical form or a polygonal prism is preferable. Due to this columnar form, powder can be packed without a space so that the tensile strength of an obtained solid freeform fabrication object can be enhanced.

The columnar form preferably has sides facing each other. The sides facing each other may have an incline. However, they are preferable when they are parallel to each other without an incline in terms of productivity and stability of solid freeform fabrication. Note that treatment of smoothing corner assists in improvement of powder flowability.

Substantially Cylindrical Form

There is no specific limit to the substantially cylindrical form. It can be suitably selected to suit to a particular application. For example, true cylindrical form and cylindroid-like form are preferable. Of these, true cylindrical form is preferable. The substantially circular portion of the substantially cylindrical form may be partially missing. In addition, the substantially circular portion has a ratio of the major axis to the minor axis of from 1 to 10.

The substantially cylindrical form preferably has substantially circular planes facing each other.

The size of the circles facing each other may not be completely identical but the diameter ratio of the large circle to the small circle is preferably 1.5 or less. More preferably, the ratio is 1.1 or less, meaning if the form is the same, powder can be packed more densely.

The diameter of the substantially cylindrical form has no particular limit and can be suitably selected to suit to a particular application. For example, the diameter is preferably from 5 to 100 $\mu$m. When the substantially circle portion of the substantially cylindrical form is an ellipse, the diameter means the major axis.

The height (distance between both planes) of the substantially cylindrical form has no particular limit and can be suitably selected to suit to a particular application. For example, the height is preferably from 5 to 100 $\mu$m.

Substantially Polygonal Prism

The substantially polygonal prism has no specific limit and is suitably selected to suit to a particular application. For example, a substantially rectangular parallelepiped, a substantially cubic, a substantially triangular prism, and a substantially hexagonal prism are usable. Of these, a substantially hexagonal prism is preferably and a substantially regular hexagonal prism is more preferable. In a substantially polygonal prism, particles (powder) can be packed without a space so that the tensile strength of an obtained solid freeform fabrication object can be enhanced. Note that the substantially polygonal prism may be partially missing.

Also, it is preferable that the substantially polygonal prism have facing surfaces of polygons.

The length of the longest straight line drawn on the base of a substantially polygonal prism has no particular limit and can be suitably selected to suit to a particular application. For example, it is preferably from 5 to 100 $\mu$m.

The height of the substantially polygonal prism has no particular limit and can be suitably selected to suit to a particular application. For example, the height is preferably from 5 to 100 $\mu$m.

In the present disclosure, the side forming the height between the planes of a columnar form includes a crushed state (barrel-like form in the case of cylindrical form) in which the resin softens at cutting. However, space appears between powder particles having arcs. Therefore, the side is preferably straight in terms of more dense packing of powder.

Columnar Form without Point

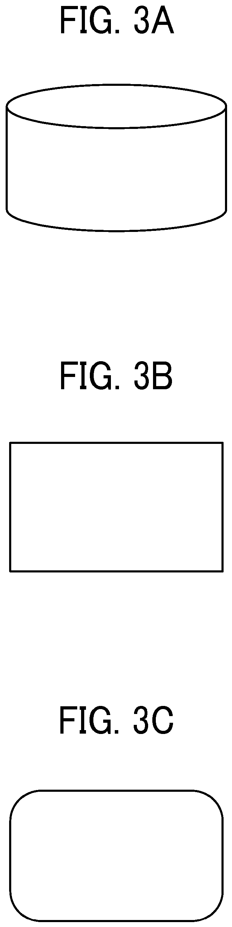

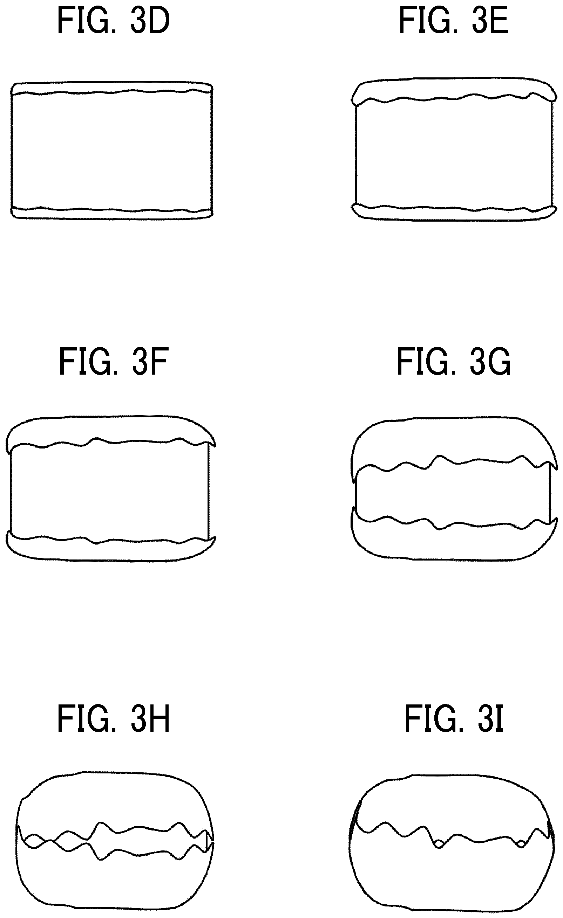

It is preferable that the powder A particles be columnar without a point. The point means an angled portion present when a columnar form is observed from side. The form of the columnar form is described with reference to FIGS. 3A to 3I. FIG. 3A is a diagram illustrating a schematic diagram illustrating a perspective view of an example of the powder A particle having a cylindrical form. FIG. 3B is a diagram illustrating a side view of an example of the Powder A particle having a cylindrical form illustrated in FIG. 3A. FIG. 3C is a diagram illustrating a side view of an example of the powder A particle having a cylindrical form with no points at ends. FIGs. 3D to 3I are diagrams illustrating side views of an example of the powder A particle having a cylindrical form with no points at ends.

As the cylindrical form illustrated in FIG. 3A is observed from side, the form is rectangular as illustrated in FIG. 3B. It has angled portions, i.e., four points. Examples of forms with no points at ends are illustrated in FIGs. 3C to 3I. Whether a columnar form has a point can be determined by a projected image of the side plane of a columnar form. For example, the side of a columnar particle is observed by a scanning electron microscope (S4200, manufactured by Hitachi Ltd.), etc. to acquire a two-dimensional image. In this case, the projected image has four sides. When the portion formed of two adjacent sides is defined as an end part, if the end part is formed of only two adjacent straight lines, an angle is formed and the particle has a point. If the end part is arc as illustrated in FIGs. 3C to 3I, no point is formed at the end portion.

Crystallinity of Powder A

As the powder A, a thermoplastic resin can be used. The thermoplastic resin is plasticized and melted upon application of heat. Of the thermoplastic resins, crystalline resins are usable. The crystalline resin has a melt peak as measured according to ISO 3146 regulation (plastic transition temperature measuring method, JIS K7121 format).

A crystal-controlled crystalline thermoplastic resin is preferable as the crystalline resin. Of these, a crystalline thermoplastic resin having crystal size and crystal alignment controlled by a method of external stimuli such as heat, drawing, crystal nuclear material, ultrasonic treatment is more preferable.

The method of manufacturing the crystalline thermoplastic resin has no particular limit and can be suitably selected to suit to a particular application. For example, resin powder is heated to the glass transition temperature or higher and thereafter subject to annealing with an optional addition of crystal nucleating agent before the annealing to enhance crystallinity. Also, a method of applying an ultrasonic wave to enhance crystallinity, a method of dissolving a resin in a solvent and slowly evaporating the solvent to enhance crystallinity, a method of applying an external electric field to grow crystal or drawing and thereafter subjecting the highly-oriented or highly-crystallized article to a process such as pulverization, cutting, etc. are suitable.

For the annealing, the resin is heated at a temperature 50 degrees higher than the glass transition temperature thereof for three days and thereafter slowly cooled down to room temperature.

Melt liquid for solid freeform fabrication is drawn (extruded) in fibrous form by an extruder during stirring at temperatures 30 degrees C or greater higher than the melting point. The melt liquid is extended to around 1/1 to around 1/10 to obtain fibers. The maximum extension ratio can be changed depending on resin and melt viscosity.

In the application of ultrasonic wave, glycerin (reagent grade, manufactured by Tokyo Chemical Industry Co. Ltd.) solvent is added to a resin in an amount of five times as much as the resin followed by heating to the temperature 20 degrees C higher than the melting point. Thereafter, ultrasonic wave is applied thereto by an ultrasonic generator (ultrasonicator UP200S, manufactured by Hielscher Ultrasonics GmbH) at a frequency of 24 KHz and an amplitude of 60 percent for two hours. Thereafter, the resultant is rinsed with a solvent of isopropanol at room temperature preferably followed by vacuum drying.

The external electric field is applied by heating powder at the glass transition temperature or higher, applying an alternative electric field (500 Hz) of 600 V/cm thereto for one hour, and slowly cooling it down.

In the powder bed fusion (PBF) method, a large temperature difference (temperature window) about crystal layer change is preferable to prevent warping during manufacturing of a solid freeform fabrication object. It is preferable that the crystal layer change be larger because resin powder having a large difference between the melting starting temperature and the recrystallization point during cooling has better fabrication property.

Composition of Powder A

Specific examples of the resin constituting the powder A include, but are not limited to, polymers such as polybutylene terephthalate, polyolefin, polyamide, polyester, polyether, polyphenylene sulfide, a liquid crystal polymer (LCP), polyacetal (POM, melting point: 175 degrees C), polyimide, and a fluorochemical resin.

These can be used alone or in combination. The thermoplastic resin may include additives such as flame retardants, plasticizers, heat stabilizing agents, and crystal nucleating agents, and polymer particles such as non-crystalline resins in addition to the polymers mentioned above. These can be used alone or in combination.

Specific examples of the polyolefin include, but are not limited to, polyethylene and polypropylene (PP, melting point: 180 degrees C). These can be used alone or in combination.

Specific examples of the polyamide include, but are not limited to, polyamide 410 (PA410), polyamide 6 (PA6), polyamide 66 (PA66, melting point of 265 degrees C), polyamide 610 (PA610), polyamide 612 (PA612), polyamide 11 (PA11), polyamide 12 (PA12), semi-aromatic polyamide 4T (PA4T), polyamide MXD6 (PAMXD6), polyamide 6T (PA6T), polyamide 9T (PA9T, melting point of 300 degrees C), and polyamide 10T (PA10T). These can be used alone or in combination. PA9T is also referred to as polynonamethylene terephthal amide, constituted of a diamine having 9 carbon atoms and a terephthalic acid monomer. In general, since the carbon acid side is an aromatic series, PA9T is referred to as semi-aromatic series. Moreover, the polyamide in this embodiment includes aramid formed by p-phenylenediamine and a terephathalic acid monomer as whole aromatic series in which the diamine side is also aromatic.

Specific examples of the polyester include, but are not limited to, polyethyleneterephthalate (PET, melting point of 260 degrees C), polybutadiene terephthalate (PBT, melting point of 218 degrees C), and polylactic acid (PLA). To impart heat resistance, polyester including aromatic series partially including terephthalic acid and isophthalic acid is also suitably used in this embodiment.

Specific examples of the polyether include, but are not limited to, polyether etherketone (PEEK, melting point of 343 degrees C), polyetherketone (PEK), polyether ketone ketone (PEKK), polyaryl ether ketone (PAEK), polyether ether ketone ketone (PEEKK), and polyetherkeone ether ketone ketone (PEKEKK). In addition to the polyether mentioned above, crystalline polymers are also suitable. Specific examples include, but are not limited to, polyacetal, polyimide, and polyether sulfone. It is also suitable to use polyamide having two melting peaks such as PA9T (it is necessary to raise the temperature of a resin to the second melting peak or higher to completely melt the resin).

The resin powder for solid freeform fabrication including the powder A may contain a fluidizer (additive), a granulating agent, a toughening agent, and an anti-oxidant. The proportion of the fluidizer is sufficient if it covers the surface of particles and preferably from 0.1 to 10 percent by mass to the powder A. Particulate inorganic material having a volume average particle diameter of less than 10 μm can be the fluidizer. However, it is preferable that the fluidizer be not contained in the resin powder for solid freeform fabrication because it may produce fine powder in the resin powder for solid freeform fabrication, which may have an impact on the ratio Dy/Dn in some cases.

Properties of Resin Powder

The resin powder for solid freeform fabrication as an example of the resin powder containing the powder A preferably satisfies at least one of the following relations (1) to (3).

(1): Tmf1 > Tmf2, where Tmf1 represents a melting starting temperature of an endothermic peak as the resin powder is heated to a temperature 30 degrees C higher than the melting point of the resin powder at a temperature rising speed of 10 degrees C per minute and Tmf2 represents a melting starting temperature of an endothermic peak as the resin powder is heated to a temperature 30 degrees C higher than the melting point of the resin powder at a temperature rising speed of 10 degrees C per minute, cooled down to -30 degrees C or lower at a temperature falling speed of 10 degrees C per minute, and heated to the temperature 30 degrees C higher than the melting point at a temperature rising speed of 10 degrees C per minute for a second time, and both Tmf1 and Tmf2 are measured in differential scanning calorimetry measuring according to ISO 3146 regulation. The melting starting temperature of the endothermic peak represents a temperature at a point -15 mW lower from a straight line drawn parallel to X axis from a site where quantity of heat becomes constant after endotherm at the melting point is finished to a lower temperature side.

(2): Cd1 > Cd2, where Cd1 represents a crystallinity obtained from an energy amount of the endothermic peak when the resin powder is heated to a temperature 30 degrees C higher than the melting point of the resin powder at a temperature rising speed of 10 degrees C per minute and Cd2 represents a crystallinity obtained from an energy amount of the endothermic peak as the resin powder is heated to a temperature 30 degrees C higher than the melting point of the resin powder at a temperature rising speed of 10 degrees C per minute, cooled down to -30 degrees C or lower at a temperature falling speed of 10 degrees C per minute, and heated to the temperature 30 degrees C higher than the melting point at a temperature rising speed of 10 degrees C per minute for a second time, and both Cd1 and Cd2 are measured in differential scanning calorimetry measuring according to ISO 3146 regulation, and

(3): C × 1 > C × 2, where C × 1 represents a crystallinity of the resin powder obtained by X-ray diffraction measuring and C × 2 represents a crystallinity obtained by X-ray diffraction measuring as the resin powder is heated to the temperature 30 degrees C higher than the melting point thereof at a temperature rising speed of 10 degrees C per minute, cooled down to -30 degrees C or lower at a temperature falling speed of 10 degrees C per minute, and thereafter heated to the temperature 30 degrees C higher than the melting point at a temperature rising speed of 10 degrees C per minute in nitrogen atmosphere.

The relations (1) to (3) regulates properties of the same resin powder for solid freeform fabrication from different points of views and relate to each other.

Measuring Method of Melting Starting Point of Relation 1 According to Differential Scanning Calorimetry Measuring

The measuring method of melting starting temperature of differential scanning calorimetry (DSC) of the relation (1) is based on the measuring method of ISO 3146 regulation (plastic transition temperature measuring method, JIS K7121 format). A differential scanning calorimeter (for example, DSC-60A, manufactured by Shimadzu Corporation) is used to measure the melting starting temperature (Tmf1) of the endothermic peak when the resin powder is heated to the temperature 30 degrees C higher than the melting point thereof for the first time at a temperature rising speed of 10 degrees C per minute. Thereafter, the resin powder is cooled down to -30 degrees C or lower at a temperature falling speed of 10 degrees C per minute and heated to the temperature 30 degrees C higher than the melting point at a temperature rising speed of 10 degrees C per minute to measure the melting starting temperature (Tmf2) of the endothermic peak. The melting starting temperature of the endothermic peak represents a temperature at a point -15 mW lower from a straight line drawn parallel to X axis from a site where quantity of heat becomes constant after endotherm at the melting point is finished to the lower temperature side.

Measuring Method of Crystallinity of Relation 2 According To Differential Scanning Calorimetry Measuring

The measuring method of crystallinity of differential scanning calorimetry (DSC) of the relation (2) is based on the measuring method according to ISO 3146 regulation (plastic transition temperature measuring method, JIS K7121 format). The energy amount (heat amount of melting) of an endothermic peak when heated to the temperature 30 degrees C higher than the melting point of resin powder at a temperature rising speed of 10 degrees C per minute is measured to obtain crystallinity (Cd1) from the heat amount of melting to the heat amount of complete crystallization. Thereafter, the resin powder is cooled down to -30 degrees C or lower at a temperature falling speed of 10 degrees C per minute and heated to the temperature 30 degrees C higher than the melting point at a temperature rising speed of 10 degrees C per minute to measure the energy amount of the endothermic peak so that crystallinity (Cd2) can be obtained as the ratio of the heat amount of melting to the heat amount of complete crystallization.

Measuring Method of Crystallinity According to X-ray Analyzer of Relation 3

Crystallinity of resin powder of the relation 3 is obtained by placing the resin powder on glass plate to measure crystallinity (C × 1) thereof by an X-ray analyzer (for example, Discover 8, manufactured by Bruker) including a two-dimensional detector at a 2θ range of from 10 to 40 at room temperature. Next, in the DSC, in a nitrogen atmosphere, the resin is heated to 30 degrees C higher than the melting point thereof at a temperature rising speed of 10 degrees C per minute. The temperature is maintained for 10 minutes and the temperature of the sample (resin powder) is back to room temperature after being cooled down to -30 degrees C at a temperature falling speed of 10 degrees C per minute. Crystallinity (C × 2) can be measured like C × 1.

Method of Manufacturing Resin Powder

The resin powder for solid freeform fabrication as an example of the resin powder is preferably manufactured by making pellet, etc., containing material constituting the resin powder for solid freeform fabrication into columnar fibrous material, unifying the columnar fibrous material, and cutting the unified columnar fibrous material.

In the fiber-producing step, it is preferable to extrude resin melt liquid into a fibrous form while stirring the resin melt liquid at a temperature 30 degrees C or greater higher than the melting point using an extruder. It is preferable to draw the resin melt liquid to about 1/1 to about 1/10 to obtain the fibrous form. The form of the cross section of the fiber depends on the form of the nozzle orifice of the extruder. For example, if the cross section is circular, the nozzle orifice is preferably circular. In this fiber-producing step, crystallinity of the resin can be controlled as described above.

In the unification step, the fibrous material prepared in the fiber-producing step is disposed side by side in the same direction, which is thereafter heated under pressure to unify the fibrous material into a sheet form. The applied heat depends on the kind of the resin to be used but is preferably the melting point or lower and more preferably the temperature 100 degrees C lower than the melting point or higher. In addition, the applied pressure is preferably 10 MPa or lower. In this step, the fibrous material can be fixed. The heat and the pressure are preferably within the range in which each united fiber is separated after the next step of cutting. During "Heated under pressure", it is preferable but not necessary to apply heat and pressure at the same time. However, for example, it is possible to apply a pressure to the material in a residual heat remaining state after the heat application. In addition, the unified material is not limited to a sheet form if the next step of cutting is suitably processed. Also, the disposition direction of the fiber is not necessarily completely but substantially the same.

If the cross-section of the form of the fibrous material obtained in the fiber-producing process is a circle, the fibrous material is partially or entirely transformed into a form having a high density upon application of heat and pressure in the unifying process. This makes it possible to produce a unified material in which a fibrous material having a polygonal cross section is unified.

In the cutting step, it is preferable to continuously cut the unified material manufactured in the unification process. As the cutting device, it is possible to use, for example, a cutter employing guillotine having a top blade and a bottom blade, a cutter employing a press-cutting method using a bottom plate and top blade, and a cutter to cut a material utilizing $CO_2$ laser beams, etc. Such a cutter cuts the unified material in such a manner that it can have a cutting surface perpendicular to the longitudinal direction of the fiber forming the unified material having a sheet-like form. The cutting width of the cutting device is preferably 5.0 to 100.0 μm. In addition, the cutting speed of the cutting device is not particularly limited. For example, it is preferably from 10 to 1000 shots per minute (spm).

In these steps, since the unified fibrous material is cut after the position and the orientation of the unified fibrous material are fixed, the cutting width and the cutting direction of the resin for solid freeform fabrication can be uniform, thereby obtaining the powder A having a uniform form. That is, in a typical method in which fiber is fixed with a movable clamp and moved toward a cutting device where the resin fiber is cut to obtain powder or water is applied to a fiber, which is thereafter cooled and fixed in ice and cut to obtain powder (however, such typical methods are not to obtain powder for solid freeform fabrication), the fiber is not sufficiently fixed. Therefore, the fiber moves at the cutting, which causes variations of the cutting width and the cutting direction. The variation of the cutting width leads to production of a massive amount of minute powder having a substantially flat portion and minute powder without a substantially flat portion. In addition, the variation in the cutting direction results in production of a massive amount of powder having an unexpected form such as the powder having a substantially flat portion formed by cutting a resin having a circular form in a diagonal way as illustrated in the schematic diagram of FIG. 2.

Therefore, it is difficult to obtain a resin powder for solid freeform fabrication having a ratio Dy/Dn of from 0.50 to 1.50 by the typical method. It is preferable to subject resin powder to a fiber-producing step, a unifying step, a cutting step to obtain the ratio Dy/Dn of from 0.50 to 1.50 and more preferable to subject to a unifying step of unifying the material under heat and pressure. The diameter of the fiber formed in the fiber-producing step, the cutting width in the cutting step, the cutting speed can be suitably adjusted, which makes it easy to obtain a ratio Dy/Dn of from 0.50 to 1.50.

Usage of Resin Powder

The resin powder of the present embodiment has a suitable balance between parameters such as granularity, particle size distribution, heat transfer properties, melt viscosity, bulk density, flowability, melting temperature, and recrystalllization temperature. This resin powder is suitably used in methods for solid freeform fabrication using resin powder such as SLS, SMS, multi-jet fusion (MJF), and binder jetting (BJ). The resin powder of the present embodiment can be suitably used as a surface modifying agent, a spacer, a lubricant, a paint, a grind stone, an additive, a secondary battery separator, foods, cosmetics, and cloths. In addition, it can be used as material or metal substitution material for use in fields such as auto mobiles, precision devices, semiconductor, aerospace, and medicines.

Device for Manufacturing Solid Freeform Fabrication Object

The device for manufacturing a solid freeform fabrication object includes a layer forming device to form a layer including the resin powder for solid freeform fabrication object and a melting device to melt the layer with electromagnetic irradiation and may furthermore optionally include other devices.

Examples of the layer forming device include rollers, blades, brushes, etc., or combinations thereof.

Examples of the electromagnetic irradiation source as the melting device are $CO_2$ lasers, infra red irradiation sources, microwave generators, radiant heaters, LED lamps, and combinations thereof.

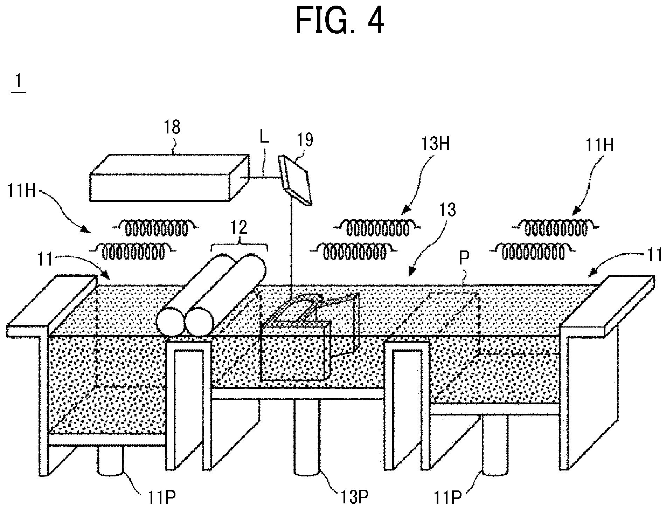

The device for manufacturing a solid freeform fabrication object with the resin powder for solid freeform fabrication is described with reference to FIG. 4. FIG. 4 is a schematic diagram illustrating the device for manufacturing a solid freeform fabrication object according to an embodiment of the present disclosure.

As illustrated in FIG. 4, a solid freeform fabrication device 1 includes a supply tank 11 as an example of the accommodating device to accommodate resin powder P for fabrication, a roller 12 to supply the resin powder P accommodated in the supply tank 11, a laser scanning space 13 where the resin powder P supplied by the roller 12 is disposed and scanned with a laser L, an electromagnetic irradiation source 18 as the irradiation source of the laser L as electromagnetic rays, and a reflection mirror 19 to reflect the laser L emitted from the electromagnetic irradiation source 18 to a determined position on the laser scanning space 13. In addition, the solid freeform fabrication device 1 further includes heaters 11H and 13H to respectively heat the resin powder P in the supply tank 11 and the resin powder P accommodated in the laser scanning space 13.

The reflection surface of the reflection mirror 19 moves based on two-dimensional data of a three-dimensional (3D) model while the electromagnetic irradiation source 18 emits the laser L. The two dimensional data of the 3D model represents each cross section form for a 3D model sliced with a predetermined interval. Therefore, when the reflection angle of the laser L changes, the portion indicated by the two-dimensional data in the laser scanning space 13 is selectively irradiated with the laser L. The resin powder positioned at the irradiation position of the laser L is melted and sintered to form a layer. That is, the electromagnetic irradiation source 18 serves as a layer forming device to form each layer of a fabrication object from the resin powder P.

In addition, the supply tank 11 and the laser scanning space 13 of the solid freeform fabrication device 1 respectively includes pistons 11P and 13P. The pistons 11P and 13P respectively move the supply tank 11 and the laser scanning space 13 up and down against the lamination direction of a fabrication object at the completion of forming a layer. Due to this, fresh resin powder P for use in fabrication of a new layer can be supplied from the supply tank 11 to the laser scanning space 13.

The solid freeform fabrication device 1 changes the irradiation position of the laser by the reflection mirror 19 to selectively melt the resin powder P. The present disclosure does not limit thereto. The resin powder of the present embodiment can be suitably used in a fabrication device employing selective mask sintering (SMS) method. In the SMS method, for example, resin powder is partially masked by a shielding mask and the unmasked portion is irradiated with electromagnetic rays such as infrared rays so that the resin powder is selectively melted for fabrication. In the case of using SMS process, the resin powder P preferably contains at least one of a heat absorbent, dark material, etc. to reinforce infrared absorbability. Examples of the heat absorbent or the dark material are carbon fiber, carbon black, carbon nano tube, and cellulose nano fiber. The SMS process suitably usable is described in the specification of US Patent No. 6,531,086.

Method of Manufacturing Solid Freeform Fabrication Object

The method of manufacturing a solid freeform fabrication object includes repeating a layer forming step to form a layer including the resin powder for solid freeform fabrication object and a melting step to melt the layer with electromagnetic irradiation and may furthermore optionally include other steps.

Examples of the layer forming step include forming a layer by a roller, a blade, a brush, or a combination thereof.

Examples of the melting step include melting with electromagnetic wave irradiation source such as $CO_2$ laser beams, an infrared irradiation source, a microwave generator, a radiant heater, an LED lamp, and a combination thereof.

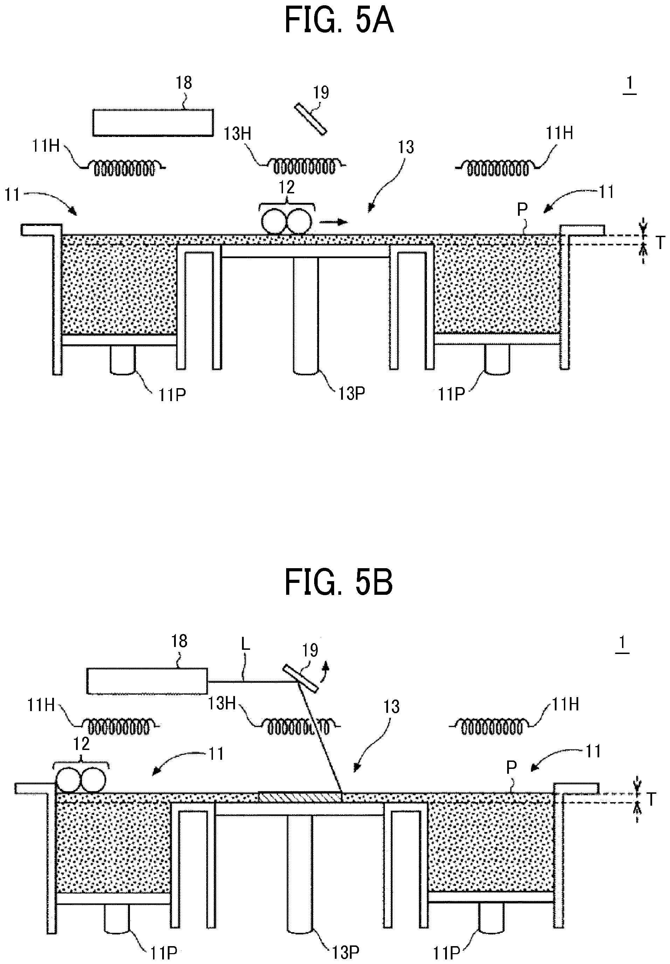

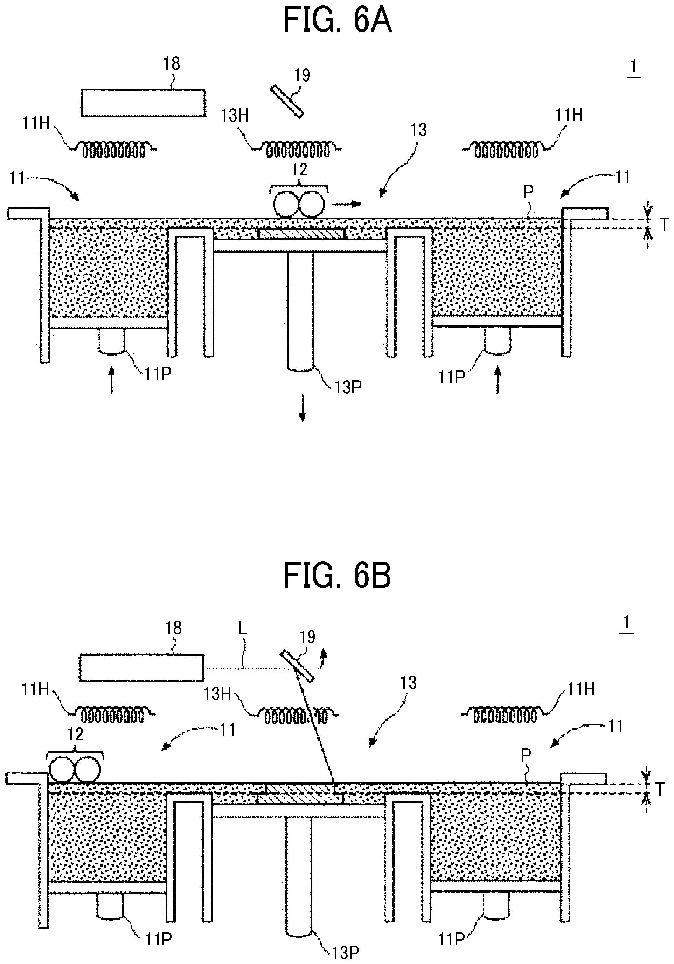

FIGs. 5 and 6 are conceptual diagrams illustrating a method of fabricating a solid freeform fabrication object. The method of manufacturing a solid freeform fabrication object using the solid freeform fabrication device 1 is described with reference to FIGs. 5 and 6.

The heater 11H applies heat to the resin powder P accommodated in the supply tank 11. The temperature of the supply tank 11 is preferably as high as possible but not higher than the melting point of the resin particle P to reduce warp which occurs during melting ascribable to laser irradiation. However, to prevent melting of the resin powder P in the supply tank 11, the temperature is at least 10 degrees C lower than the melting point of the resin powder P. As illustrated in FIG. 5A, as one example of the supply process, the engine of the solid freeform fabrication device 1 drives the roller 12 to supply the resin powder P in the supply tank 11 to the laser scanning space 13 and level the laser scanning space 13, thereby forming a powder layer having a thickness of T corresponding to the thickness of a single layer. The heater 13H applies heat to the resin powder P supplied to the laser scanning space 13. The temperature of the laser scanning space 13 is preferably as high as possible in order to reduce warp occurring during melting ascribable to laser irradiation but at least 5 degrees C lower than the melting point of the resin particle P at the laser scanning space 13 to prevent melting of the resin powder P there.

The engine of the solid freeform fabrication device 1 receives input of multiple two-dimensional data created from the 3D model. As illustrated in FIG. 5B, the engine of the solid freeform fabrication device 1 causes the electromagnetic irradiation source 18 to emit laser beams while moving the reflection surface of the reflection mirror 19 based on the two dimensional data for the part closest to the base of a fabrication object. The power of the laser has no particular limit and can be suitably selected to suit to a particular application. For example, it is preferably from 10 to 150 W. Due to the irradiation of the laser, of the powder layers, the resin powder P positioned corresponding to the pixel indicated by the two dimensional data for the part closest to the base of a fabrication object is melted. At the completion of the laser irradiation, the melted resin cures to form a sintered layer having a form corresponding to the two dimensional data for the part closest to the base of a fabrication object.

The thickness T of the sintered layer has no particular limit. For example, the average of the thickness T is preferably 10 $\mu$m or greater, more preferably 50 $\mu$m or greater, and furthermore preferably 100 $\mu$m or greater. The thickness T of the sintered layer has no particular limit. For example, as the average, it is preferably less than 200 $\mu$m, more preferably less than 150 $\mu$m, and furthermore preferably less than 120 $\mu$m.

As illustrated in FIG. 6A, at the forming of the sintered layer closest to the base, the engine of the solid freeform fabrication device 1 lowers the laser scanning space 13 in an amount corresponding to the thickness T corresponding to the thickness of a single layer by the piston 13P to form a fabrication space having a thickness T on the laser scanning space 13. In addition, the engine of the solid freeform fabrication device 1 elevates the piston 11P to supply fresh resin powder P. Thereafter, as illustrated in FIG. 6A, the engine of the solid freeform fabrication device 1 drives the roller 12 to supply the resin powder P in the supply tank 11 to the laser scanning space 13 and level the laser scanning space 13, thereby forming a powder layer having a thickness of T corresponding to the thickness of a single layer.

As illustrated in FIG. 6B, the engine of the solid freeform fabrication device 1 causes the electromagnetic irradiation source 18 to emit laser beams while moving the reflection surface of the reflection mirror 19 based on the two dimensional data for the part second closest to the base of all of the multiple two-dimensional data. Due to the irradiation of the laser, of the powder layers, the resin powder P positioned corresponding to the pixel indicated by the two dimensional data for the part second closest to the base is melted. At the completion of the laser irradiation, the melted resin cures to form and laminate the sintered layer having a form of the two-dimensional data of the second closest to the base on the sintered layer closest to the base.

The solid freeform fabrication device 1 repeats the supplying process and the layer forming process to laminate the sintered layers. At the completion of fabrication based on all of the multiple two-dimensional data, a fabrication object having the same form as the 3D model is obtained.

Solid Freeform Fabrication Object

The solid freeform fabrication object can be suitably manufactured by the method of manufacturing a solid freeform fabrication object of the present disclosure.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

Example 1

Polybutylene terephthalate (PBT) resin (NOVADURAN@ 5020, melting point of 218 degrees C, glass transition temperature of 43 degrees C, manufactured by Mitsubishi Engineering-Plastics Corporation) was stirred at a temperature 30 degrees C higher than the melting point thereof and thereafter resin melt liquid for solid freeform fabrication was extruded into a fibrous form using an extruder (manufactured by The Japan Steel Works, LTD.) having a nozzle having a circular orifice. The fiber was adjusted to have a fiber diameter (diameter) of 55 $\mu$m by stretching it 4 times. Thereafter, the formed fibers were arranged side by side in the same direction, and a pressure of 2 MPa was applied while heating at 200 degrees C to integrate them into a sheet-like form. Further, the fibers unified into the sheet-like form were cut in such a manner that the cut width was 50 $\mu$m and the cut speed was 280 shots per minute (spm) using a cutting device of a push-off type (NJ Series 1200 type, manufactured by Ogino Seiki Seisakusho Co., Ltd.). The form of the obtained powder was observed using a scanning electron microscope JSM-7800FPRIME, manufactured by JEOL Ltd. The powder contained resin powder (the powder A) consisting of particles having a substantially cylindrical form having a substantially flat portion and a ratio Y/X of from 0.5 to 1.0. The obtained powder was determined as the resin powder for solid freeform fabrication of Example 1.

Example 2

A resin powder for solid freeform fabrication including resin powder particles having a substantially cylindrical form having a substantially flat portion of Example 2 was obtained in the same manner as in Example 1 except that the cut speed was changed from 280 spm to 400 spm. The obtained resin powder was observed in the same manner as in Example 1 to find that the resin powder for solid freeform fabrication of Example 2 contained the powder A.

Example 3

A resin powder for solid freeform fabrication including resin powder particles having a substantially cylindrical form having a substantially flat portion of Example 3 was obtained in the same manner as in Example 1 except that the cut speed was changed from 280 spm to 500 spm. The obtained resin powder was observed in the same manner as in Example 1 to find that the resin powder for solid freeform fabrication of Example 3 contained the powder A.

Example 4

A resin powder for solid freeform fabrication including resin powder particles having a substantially cylindrical form having a substantially flat portion of Example 4 was obtained in the same manner as in Example 1 except that the cut width was changed from 50 to 40 $\mu$m.
The obtained resin powder was observed in the same manner as in Example 1 to find that the resin powder for solid freeform fabrication of Example 4 contained the powder A.

Example 5

A resin powder for solid freeform fabrication including resin powder particles having a substantially cylindrical form having a substantially flat portion of Example 5 was obtained in the same manner as in Example 1 except that the cut width was changed from 50 to 60 $\mu$m.
The obtained resin powder was observed in the same manner as in Example 1 to find that the resin powder for solid freeform fabrication of Example 5 contained the powder A.

Example 6

A resin powder for solid freeform fabrication including resin powder particles having a substantially cylindrical form having a substantially flat portion of Example 6 was obtained in the same manner as in Example 1 except that the cut width was changed from 50 to 70 $\mu$m.

The obtained resin powder was observed in the same manner as in Example 1 to find that the resin powder for solid freeform fabrication of Example 6 contained the powder A.

Example 7

A resin powder for solid freeform fabrication including resin powder particles having a substantially cylindrical form having a substantially flat portion of Example 7 was obtained in the same manner as in Example 1 except that the fiber diameter was changed from 55 to 65 $\mu$m. The obtained resin powder was observed in the same manner as in Example 1 to find that the resin powder for solid freeform fabrication of Example 7 contained the powder A.

Example 8

A resin powder for solid freeform fabrication including resin powder particles having a substantially cylindrical form having a substantially flat portion of Example 8 was obtained in the same manner as in Example 1 except that the fiber diameter was changed from 55 to 75 $\mu$m. The obtained resin powder was observed in the same manner as in Example 1 to find that the resin powder for solid freeform fabrication of Example 8 contained the powder A.

Example 9

A resin powder for solid freeform fabrication including resin powder particles having a substantially cylindrical form having a substantially flat portion of Example 9 was obtained in the same manner as in Example 1 except that the fiber diameter was changed from 55 to 85 $\mu$m. The obtained resin powder was observed in the same manner as in Example 1 to find that the resin powder for solid freeform fabrication of Example 9 contained the powder A.

Example 10

A resin powder for solid freeform fabrication including resin powder particles having a substantially cylindrical form having a substantially flat portion of Example 10 was obtained in the same manner as in Example 1 except that the polybutylene terephthalate (PBT) resin was changed to polyphenylene sulfide (PPS) resin (Torelina A900, melting point of 278 degrees C, glass transition temperature of 93 degrees C, manufactured by Toray Industries, Inc.). The obtained resin powder was observed in the same manner as in Example 1 to find that the resin powder for solid freeform fabrication of Example 10 contained the powder A.

Example 11

A resin powder for solid freeform fabrication including resin powder particles having a substantially cylindrical form having a substantially flat portion of Example 11 was obtained in the same manner as in Example 1 except that the polybutylene terephthalate (PBT) resin was changed to polyetherether ketone (PEEK) resin (HT P22PF, melting point of 343 degrees C, glass transition temperature of 143 degrees C, manufactured by VICTREX). The obtained resin powder was observed in the same manner as in Example 1 to find that the resin powder for solid freeform fabrication of Example 11 contained the powder A.

Example 12

A resin powder for solid freeform fabrication including resin powder particles having a substantially cylindrical form having a substantially flat portion of Example 12 was obtained in the same manner as in Example 1 except that the polybutylene terephthalate (PBT) resin was changed to polyacetal (POM) resin (Jupital® F10-01, melting point of 175 degrees C, manufactured by Mitsubishi Engineering-Plastics Corporation). The obtained resin powder was observed in the same manner as in Example 1 to find that the resin powder for solid freeform fabrication of Example 12 contained the powder A.

Example 13

A resin powder for solid freeform fabrication including resin powder particles having a substantially cylindrical form having a substantially flat portion of Example 13 was obtained in the same manner as in Example 1 except that the polybutylene terephthalate (PBT) resin was changed to polyamide 66 (PA66) resin (Leona™ 1300S, melting point of 265 degrees C, manufactured by Asahi Kasei Chemicals Corporation). The obtained resin powder was observed in the same manner as in Example 1 to find that the resin powder for solid freeform fabrication of Example 13 contained the powder A.

Example 14

A resin powder for solid freeform fabrication including resin powder particles having a substantially cylindrical form having a substantially flat portion of Example 14 was obtained in the same manner as in Example 1 except that the polybutylene terephthalate (PBT) resin was changed to polypropylene (PP) resin (NOVATEC™ MA3, melting point of 180 degrees C, glass transition temperature of 0 degrees C, manufactured by JAPAN POLYPROPYLENE CORPORATION). The obtained resin powder was observed in the same manner as in Example 1 to find that the resin powder for solid freeform fabrication of Example 14 contained the powder A.

Comparative Example 1

A polybutylene terephthalate (PBT) resin (NOVADURAN® 5020, melting point of 218 degrees C, glass transition temperature of 43 degrees C, manufactured by Mitsubishi Engineering-Plastics Corporation) was subject to frost shattering at -200 degrees C using a cold pulverization system (Cryogenic Grinding Unit, LINREX MILL LX1, manufactured by Hosokawa Micron Corporation). The form of the thus-obtained powder was observed using a scanning electron microscope (JSM-7800 FPRIME, manufactured by JEOL Ltd.) to find that powder particles having a substantially flat portion was contained. However, the area of each of the substantially flat portion of the powder particle was small and none of them satisfied the ratio of Y/X of from 0.5 to 1.0 as the powder A.
The thus-obtained powder was determined as the resin powder for solid freeform fabrication of Comparative Example 1.

Comparative Example 2

A powder of a polyamide (PA) resin (PA 2200 Balance 1.0, manufactured by EOS Co., Ltd.) obtained by a polymerization method was determined as the resin powder for solid freeform fabrication of Comparative Example 2. The form of this resin powder particles for solid freeform fabrication was observed using a scanning electron microscope (JSM-7800 FPRIME, manufactured by JEOL Ltd.) to find that none of them was the powder A having a substantially spherical form and a substantially flat portion.

Comparative Example 3

Polybutylene terephthalate (PBT) resin (NOVADURAN® 5020, melting point of 218 degrees C, glass transition temperature of 43 degrees C, manufactured by Mitsubishi Engineering-Plastics Corporation) was stirred at a temperature 30 degrees C higher than the melting point thereof and thereafter resin melt liquid for solid freeform fabrication was extruded into a fibrous form using an extruder (manufactured by The Japan Steel Works, LTD.) having a nozzle having a circular orifice. The fiber was adjusted to have a fiber diameter (diameter) of 55 $\mu$m by stretching it 4 times. Thereafter, the formed fibers were disposed side by side in the same direction, and oil was applied. Further, the fibers to which oil was applied were cut in such a manner that the cut width was 50 $\mu$m and the cut speed was 280 spm using a cutting device of a push-off type (NJ Series 1200 type, manufactured by Ogino Seiki Seisakusho Co., Ltd.). The form of the obtained powder particles was observed using a scanning electron microscope JSM-7800 FPRIME, manufactured by JEOL Ltd. The powder contained resin powder particles (the powder A) having a substantially cylindrical form having a substantially flat portion and a ratio Y/X of from 0.5 to 1.0. The thus-obtained powder was determined as the resin powder for solid freeform fabrication of Comparative Example 3.

Comparative Example 4

A resin powder for solid freeform fabrication including resin powder particles having a substantially cylindrical form having a substantially flat portion of Comparative Example 4 was obtained in the same manner as in Comparative Example 3 except that the oil applied to the fibers was changed to water. The obtained resin powder was observed in the same manner as in Example 1 to find that the resin powder for solid freeform fabrication of Comparative Example 4 contained the powder A.

Comparative Example 5

Polybutylene terephthalate (PBT) resin (NOVADURAN® 5020, melting point of 218 degrees C, glass transition temperature of 43 degrees C, manufactured by Mitsubishi Engineering-Plastics Corporation) was stirred at a temperature 30 degrees C higher than the melting point thereof and thereafter resin melt liquid for solid freeform fabrication was extruded into a fibrous form using an extruder (manufactured by The Japan Steel Works, LTD.) having a nozzle having a circular orifice. The fiber was adjusted to have a fiber diameter (diameter) of 55 $\mu$m by stretching it 4 times. Thereafter, a non-woven fabric was produced using the formed fibers. Further, the non-woven fibers were cut in such a manner that the cut width was 50 $\mu$m and the cut speed was 280 spm using a cutting device of a push-off type (NJ Series 1200 type, manufactured by Ogino Seiki Seisakusho Co., Ltd.). The form of the obtained powder was observed using a scanning electron microscope JSM-7800 FPRIME, manufactured by JEOL Ltd. The powder contained resin powder particles (the powder A) having a substantially cylindrical form having a substantially flat portion and a ratio Y/X of from 0.5 to 1.0. The thus-obtained powder was determined as the resin powder for solid freeform fabrication of Comparative Example 5.

Comparative Example 6

A resin powder for solid freeform fabrication including resin powder particles having a substantially cylindrical form having a substantially flat portion of Comparative Example 6 was obtained in the same manner as in Example 1 except that the cut width was changed from 50 to 120 $\mu$m. The obtained resin powder was observed in the same manner as in Example 1 to find that the resin powder for solid freeform fabrication of Comparative Example 6 contained the powder A.

Comparative Example 7

Polybutylene terephthalate (PBT) resin (NOVADURAN® 5020, melting point of 218 degrees C, glass transition temperature of 43 degrees C, manufactured by Mitsubishi Engineering-Plastics Corporation) was stirred at a temperature 30 degrees C higher than the melting point thereof and thereafter resin melt liquid for solid freeform fabrication was extruded into a fibrous form using an extruder (manufactured by The Japan Steel Works, LTD.) having a nozzle having a circular orifice. The fiber was adjusted to have a fiber diameter (diameter) of 55 $\mu$m by stretching it 4 times. Thereafter, the formed fibers were aligned in the same direction and fixed with a movable clamp. Further, the fibers fixed by the clamp were cut in such a manner that the cut width was 50 $\mu$m and the cut speed was 280 spm using a cutting device of a push-off type (NJ Series 1200 type, manufactured by Ogino Seiki Seisakusho Co., Ltd.). The form of the obtained powder particles was observed using a scanning electron microscope JSM-7800 FPRIME, manufactured by JEOL Ltd. The powder contained resin powder particles (the powder A) having a substantially cylindrical form having a substantially flat portion and a ratio Y/X of from 0.5 to 1.0. The thus-obtained powder was determined as the resin powder for solid freeform fabrication of Comparative Example 7.

Comparative Example 8

Polybutylene terephthalate (PBT) resin (NOVADURAN® 5020, melting point of 218 degrees C, glass transition temperature of 43 degrees C, manufactured by Mitsubishi Engineering-Plastics Corporation) was stirred at a temperature 30 degrees C higher than the melting point thereof and thereafter resin melt liquid for solid freeform fabrication was extruded into a fibrous form using an extruder (manufactured by The Japan Steel Works, LTD.) having a nozzle having a circular orifice. The fiber was adjusted to have a fiber diameter (diameter) of 55 $\mu$m by stretching it 4 times. Thereafter, the formed fibers were disposed side by side in the same direction. Thereafter, water was applied to the fibers, which was thereafter cooled to fix the fibers in ice. Further, the fibers fixed in ice were cut in such a manner that the cut width was 50 $\mu$m and the cut speed was 280 spm using a cutting device of a push-off type (NJ Series 1200, manufactured by Ogino Seiki Seisakusho Co., Ltd.). The form of the obtained powder particles was observed using a scanning electron microscope JSM-7800 FPRIME, manufactured by JEOL Ltd. The powder contained resin powder particles (the powder A) having a substantially cylindrical form having a substantially flat portion and a ratio Y/X of from 0.5 to 1.0. The thus-obtained powder was determined as the resin powder for solid freeform fabrication of Comparative Example 8.

The number average surface diameter Dy, the number average particle diameter Dn, the ratio of the powder A, the volume average particle diameter Dv, the ratio of the powder A having a diameter YA of 10 $\mu$m or less, and the circularity of substantially flat portion of the resin powder for solid freeform fabrication obtained in each of Examples and Comparative Examples were measured. The results are shown in Table 1.

Number Average Surface Diameter Dy

The obtained resin powder for solid freeform fabrication was photographed at a magnifying power of 150 $\times$ using a scanning electron microscope (JSM-7800 FPRIME, manufactured by JEOL Ltd.). The projected area of a predetermined resin powder particle and the projected area of a substantially flat portion were determined from the photographed image and the diameter X (μm) of a circle having the area equivalent to the projected area of the predetermined resin powder particle and the diameter Y (μm) of a circle having the area equivalent to the projected area of the substantially flat portion were calculated to obtain the ratio Y/X. 100 of the powder A particles satisfying the ratio Y/X of from 0.5 to 1.0 were identified.

The sum of $Y_A$ which was the diameter Y of the identified powder A particles was divided by 100 as the number of the total of the identified powder A particles, to obtain the number average surface diameter Dy (μm).

Ratio of Powder A

The obtained resin powder for solid freeform fabrication was photographed at a magnifying power of 150 x using a scanning electron microscope (JSM-7800 FPRIME, manufactured by JEOL Ltd.). The projected area of a predetermined resin powder particle and the projected area of a substantially flat portion were determined from the photographed image and the diameter X (μm) of a circle having the area equivalent to the projected area of the predetermined resin powder particle and the diameter Y (μm) of a circle having the area equivalent to the projected area of the substantially flat portion were calculated to obtain the ratio Y/X. 100 of the powder A particles satisfying the ratio Y/X of from 0.5 to 1.0 were identified.

Next, the number of all powder particles (resin powder for solid freeform fabrication) present in the image used to identify the powder A was counted and the number of 100 as the number of the identified powder A particles was divided by the total number of all powder particles to determine the ratio (percent) of the number of the powder A particles.

Number Average Particle Diameter Dn and Volume Average Particle Diameter Dv

The volume average particle diameter (μm) was measured by using a particle size distribution measuring instrument (Microtrac MT 3300EXII, manufactured by MicrotracBEL Corp.) employing a drying process (atmosphere) method without using a solvent, utilizing particle refractive index per resin powder particle. The particle refractive indices were set as 1.57 for polybutylene terephthalate (PBT) resin, 1.70 for polyphenylene sulfide (PPS) resin, 1.57 for polyether ether ketone (PEEK) resin, 1.48 for polyacetal (POM) resin, 1.53 for polyamide 66 (PA 66) resin, and 1.48 for polypropylene (PP) resin.

In addition, the number average particle diameter Dn (μm) was measured using a particle size distribution measuring instrument (F-PIA 3000, manufactured by Sysmex Corporation).

Further, the ratio (Dy/Dn) of the number average surface diameter Dy to the number average particle diameter Dn was calculated from the obtained number average particle diameter Dn and the number average surface diameter Dy. In addition, the ratio (Dv/Dn) of volume average particle diameter Dv/number average particle diameter Dn was calculated from the obtained number average particle diameter Dn and the volume average particle system Dv.

Ratio of Powder A Particles Having Diameter $Y_A$ of 2.0 μm or Less

The obtained resin powder for solid freeform fabrication was photographed at a magnifying power of 150 x using a scanning electron microscope (JSM-7800 FPRIME, manufactured by JEOL Ltd.). The projected area of a predetermined resin powder particle and the projected area of a substantially flat portion were determined from the photographed image and the diameter X (μm) of a circle having the area equivalent to the projected area of the predetermined resin powder particle and the diameter Y (μm) of a circle having the area equivalent to the projected area of the substantially flat portion were calculated to obtain the ratio Y/X. 100 of the powder A satisfying the ratio Y/X of from 0.5 to 1.0 were identified.

Next, a distribution based on the size of $Y_A$ which is the diameter Y of the identified powder A particles was created. In this distribution, the number of the powder A particles having a diameter $Y_A$ of 2.0 μm or less was counted and divided by 100 as the number of the identified powder A particles, whereby the ratio (percent) of the number of the powder A particles having a diameter $Y_A$ of 2.0 μm or less was obtained.

Circularity of Substantially Flat Portion

The obtained resin powder for solid freeform fabrication was photographed at a magnifying power of 150 × using a scanning electron microscope (JSM-7800 FPRIME, manufactured by JEOL Ltd.). The projected area of a predetermined resin powder particle and the projected area of a substantially flat portion were determined from the photographed image and the diameter X (μm) of a circle having the area equivalent to the projected area of the predetermined resin powder particle and the diameter Y (μm) of a circle having the area equivalent to the projected area of the substantially flat portion were calculated to obtain the ratio Y/X. 100 of the powder A particles satisfying the ratio Y/X of from 0.5 to 1.0 were identified.

Next, circularity of each powder A particle of the identified powder A was determined by the following relation. Note that S represents the area of the substantially flat portion, and L represents the circumferential length of the substantially flat portion.

$$\text{Circularity} = 4\pi S/L^2$$

Further, the average of circularity of each powder A particle was calculated to obtain circularity of the powder A.

Table 1

| | Resin material | Fiber diameter (μm) | Powdering method | Cutting condition | | |
|---|---|---|---|---|---|---|
| | | | | Cut width (μm) | Cut speed (spm) | Fixing device |
| Example 1 | PBT | 55 | Cutting method | 50 | 280 | Forming sheet form |
| Example 2 | PBT | 55 | Cutting method | 50 | 400 | Forming sheet form |
| Example 3 | PBT | 55 | Cutting method | 50 | 500 | Forming sheet form |
| Example 4 | PBT | 55 | Cutting method | 40 | 280 | Forming sheet form |
| Example 5 | PBT | 55 | Cutting method | 60 | 280 | Forming sheet form |
| Example 6 | PBT | 55 | Cutting method | 70 | 280 | Forming sheet form |
| Example 7 | PBT | 65 | Cutting method | 50 | 280 | Forming sheet form |
| Example 8 | PBT | 75 | Cutting method | 50 | 280 | Forming sheet form |
| Example 9 | PBT | 85 | Cutting method | 50 | 280 | Forming sheet form |
| Example 10 | PPS | 55 | Cutting method | 50 | 280 | Forming sheet form |
| Example 11 | PEEK | 55 | Cutting method | 50 | 280 | Forming sheet form |
| Example 12 | POM | 55 | Cutting method | 50 | 280 | Forming sheet form |
| Example 13 | PA | 55 | Cutting method | 50 | 280 | Forming sheet form |
| Example 14 | PP | 55 | Cutting method | 50 | 280 | Forming sheet form |
| Comparative Example 1 | PBT | - | Pulverization method | - | - | - |
| Comparative Example 2 | PA | - | Polymerization method | - | - | - |
| Comparative Example 3 | PBT | 55 | Cutting method | 50 | 280 | Oil applied |
| Comparative Example 4 | PBT | 55 | Cutting method | 50 | 280 | Water applied |

(continued)

|  | Resin material | Fiber diameter (μm) | Powdering method | Cutting condition | | |
|---|---|---|---|---|---|---|
|  |  |  |  | Cut width (μm) | Cut speed (spm) | Fixing device |
| Comparative Example 5 | PBT | 55 | Cutting method | 50 | 280 | Non-woven fabric |
| Comparative Example 6 | PBT | 55 | Cutting method | 120 | 280 | Forming sheet form |
| Comparative Example 7 | PBT | 55 | Cutting method | 50 | 280 | Clamp |
| Comparative Example 8 | PBT | 55 | Cutting method | 50 | 280 | Icicle |

| | Powder having substantially flat portion | Property of powder | | | | | | | Circularity |
|---|---|---|---|---|---|---|---|---|---|
| | | Ratio (percent) of powder A | Dy (μm) | Dn (μm) | Dy/Dn | Dv (μm) | Dv/Dn | Ratio (percent) of powder A having $Y_A$ of 2 μm or less | |
| Example 1 | Yes | 90 | 55 | 50 | 1.10 | 60 | 1.20 | 8.0 | 0.88 |
| Example 2 | Yes | 87 | 58 | 48 | 1.21 | 70 | 1.46 | 10.0 | 0.86 |
| Example 3 | Yes | 85 | 60 | 45 | 1.33 | 80 | 1.78 | 15.0 | 0.85 |
| Example 4 | Yes | 80 | 50 | 45 | 1.11 | 45 | 1.00 | 6.0 | 0.86 |
| Example 5 | Yes | 90 | 57 | 70 | 0.81 | 70 | 1.00 | 4.0 | 0.85 |
| Example 6 | Yes | 90 | 60 | 110 | 0.55 | 90 | 0.82 | 2.0 | 0.83 |
| Example 7 | Yes | 80 | 65 | 60 | 1.08 | 60 | 1.00 | 6.0 | 0.90 |
| Example 8 | Yes | 80 | 75 | 62 | 1.21 | 60 | 0.97 | 3.0 | 0.91 |
| Example 9 | Yes | 80 | 85 | 65 | 1.31 | 60 | 0.92 | 2.0 | 0.92 |
| Example 10 | Yes | 80 | 51 | 51 | 1.00 | 60 | 1.18 | 9.0 | 0.88 |
| Example 11 | Yes | 80 | 52 | 51 | 1.02 | 59 | 1.16 | 10.0 | 0.89 |
| Example 12 | Yes | 80 | 51 | 50 | 1.02 | 61 | 1.22 | 9.0 | 0.89 |
| Example 13 | Yes | 80 | 51 | 51 | 1.00 | 60 | 1.18 | 10.0 | 0.90 |
| Example 14 | Yes | 80 | 51 | 50 | 1.02 | 59 | 1.18 | 8.0 | 0.91 |
| Comparative Example 1 | Yes | 0 | - | 15 | - | 70 | 4.67 | - | 0.78 |
| Comparative Example 2 | None | 0 | - | 20 | - | 60 | 3.00 | - | 0.95 |
| Comparative Example 3 | Yes | 30 | 67 | 40 | 1.68 | 80 | 2.00 | 30.0 | 0.83 |
| Comparative Example 4 | Yes | 30 | 90 | 30 | 3.00 | 100 | 3.33 | 33.0 | 0.80 |
| Comparative Example 5 | Yes | 30 | 70 | 15 | 4.67 | 90 | 6.00 | 60.0 | 0.78 |
| Comparative Example 6 | Yes | 30 | 55 | 130 | 0.42 | 150 | 1.15 | 5.0 | 0.83 |

(continued)

| | Property of powder | | | | | | | | |
| --- | --- | --- | --- | --- | --- | --- | --- | --- | --- |
| | Powder having substantially flat portion | Ratio (percent) of powder A | Dy (μm) | Dn (μm) | Dy/Dn | Dv (μm) | Dv/Dn | Ratio (percent) of powder A having $Y_A$ of 2 μm or less | Circularity |
| Comparative Example 7 | Yes | 60 | 65 | 33 | 1.97 | 100 | 3.03 | 30.0 | 0.84 |
| Comparative Example 8 | Yes | 70 | 65 | 40 | 1.63 | 65 | 1.63 | 25.0 | 0.83 |

Flowability and surface roughness Ra of the resin powder for solid freeform fabrication of each of Examples and Comparative Examples were evaluated in the following manner. The results are shown in Table 2.

Flowability

Loose density of the prepared resin powder for solid freeform fabrication was measured using a bulk density gauge (in accordance with JIS Z-2504 format, manufactured by "Kuramochi Kagaku Kikai Seisakusho"), and the measured loose density was divided by true density of each resin to determine loose filling ratio (percent). Rated C or above are evaluated as practical.

Evaluation Criteria

A: 40 percent or more
B: 35 percent to less than 40 percent
C: 33 percent to less than 35 percent
D: Less than 33 percent

Surface Roughness Ra

A solid freeform fabrication object was manufactured by using an SLS type fabrication device (AM S5500P, manufactured by Ricoh Company Ltd.) using the prepared resin powder for solid freeform fabrication. The setting conditions were: average layer thickness of 0.1 mm, a laser output of from 10 to 150 W, a laser scanning space of 0.1 mm, and a part bed temperature of -3 degrees C below the melting point. As the solid freeform fabrication object, ISO (International Organization for Standardization Organization) 3167 Type 1A multi-purpose canine bone-like test specimen (specimen has a center portion of a length of 80 mm, a thickness of 4 mm, and a width of 10 mm) was prepared.
Next, surface roughness Ra of the fabricated object was measured using a one-shot 3D form measuring device (VR-3200, manufactured by Keyence Corporation). Surface roughness Ra was measured at low magnifying power (38 ×) while some were measured at higher magnifying power (40 ×) with a reference surface correction. Further, surface roughness Ra was the average value of three specimens in the X direction and three specimens in the Y direction. 20 μm or lower was evaluated as practically usable.

Table 2

|  | Evaluation | |
|---|---|---|
|  | Flowability | Surface roughness Ra (μm) |
| Example 1 | A | 12 |
| Example 2 | B | 15 |
| Example 3 | B | 18 |
| Example 4 | B | 12 |
| Example 5 | B | 15 |
| Example 6 | C | 19 |
| Example 7 | B | 15 |
| Example 8 | B | 18 |
| Example 9 | B | 20 |
| Example 10 | A | 15 |
| Example 11 | A | 14 |
| Example 12 | A | 15 |
| Example 13 | A | 13 |
| Example 14 | A | 15 |

(continued)

| | Evaluation | |
|---|---|---|
| | Flowability | Surface roughness Ra ($\mu$m) |
| Comparative Example 1 | D | 35 |
| Comparative Example 2 | A | 25 |
| Comparative Example 3 | D | 40 |
| Comparative Example 4 | D | 40 |
| Comparative Example 5 | D | 40 |
| Comparative Example 6 | D | 39 |
| Comparative Example 7 | C | 28 |
| Comparative Example 8 | C | 26 |

Having now fully described embodiments of the present invention, it will be apparent to one of ordinary skill in the art that many changes and modifications can be made thereto without departing from the scope of embodiments of the invention as set forth herein.

**Claims**

1. 1. A resin powder for solid freeform fabrication comprising:

   particles with a substantially cylindrical shape and having a ratio Y/X of from 0.5 to 1.0, where X and Y respectively represent: the diameter of a circle having an area equivalent to the projected area of the resin powder particles, and the diameter of a circle having an area equivalent to the projected areas of the substantially flat portions of the resin powder particles showing a flat portion, these particles being hereinafter referred to as powder A, in a projected image of the resin powder particles obtained by a scanning electron microscope, a ratio Dy/Dn from 0.50 to 1.50, wherein Dn is a number average particle diameter of the resin powder particles, and Dy represents an average on number basis of $Y_A$, wherein each $Y_A$ is the diameter of a circle having an area equivalent to each projected area of the substantially flat portion of particles of powder A, in a projected image of the resin powder particles obtained by a scanning electron microscope.

2. The resin powder according to claim 1, wherein the ratio Dy/Dn is from 0.70 to 1.20.

3. The resin powder according to claim 1 or 2, wherein, in a distribution of the diameter $Y_A$, an integrated value of a number of the powder A particles having a diameter $Y_A$ of 2.0 $\mu$m or less is 20.0 percent or less of a total number of the powder A particles.

4. The resin powder according to claim 1 or 2, wherein, in a distribution of the diameter $Y_A$, an integrated value of a number of the powder A particles having a diameter $Y_A$ of 2.0 $\mu$m or less is 10.0 percent or less of a total number of the powder A particles.

5. The resin powder according to any one of claims 1 to 4, wherein the number average surface diameter Dy is from 40.0 to 100.0 $\mu$m.

6. The resin powder according to any one of claims 1 to 5, wherein the substantially flat portion is substantially circular.

7. The resin powder according to any one of claims 1 to 6, wherein the substantially flat portion has a circularity of 0.85 or greater.

8. The resin powder according to any one of claims 1 to 7, wherein the powder A particles have a columnar form.

9. The resin powder according to claim 8, wherein the columnar form has a height of from 5.0 to 100.0 $\mu$m.

10. The resin powder according to any one of claims 1 to 9, wherein the resin used for the powder A comprises at least one member selected from the group consisting of polybutylene terephthalate, polyamide, polyacetal, and polyether ether ketone.

11. The resin powder according to any one previous claim, wherein the proportion of powder A to the total resin powder for solid freeform fabrication is 50 to 100% by mass.

12. A system for manufacturing a solid freeform fabrication object, comprising
the resin powder of any one of claims 1 to 11; and a device (1) comprising
an accommodating device (11) to accomodate the resin powder a layer forming device (12; 18) to form a layer comprising the resin powder; and a melting device (18) to melt the layer with electromagnetic irradiation.

13. A method of manufacturing a solid freeform fabrication object, comprising:

forming a layer comprising the resin powder of any one of claims 1 to 11; and
melting the layer by electromagnetic irradiation.

14. A method of manufacturing a solid freeform fabrication object as claimed in claim 13, further comprising repeating the forming and the melting.

15. A method of manufacturing the resin powder for solid freeform fabrication of any one of claims 1 to 11, comprising:

forming a material constituting the resin powder into fibrous material;
unifying the fibrous material disposed in a same direction to form a unified material, wherein unifying comprises applying heat under pressure; and
cutting the unified material.


**Patentansprüche**

1. Harzpulver zum Festkörper-Freiformen, Folgendes umfassend:

Partikel mit einer im Wesentlichen zylindrischen Form, und welche ein Verhältnis Y/X von 0,5 bis 1,0 aufweisen, wobei X und Y jeweils Folgendes darstellen: den Durchmesser eines Kreises, welcher eine Fläche aufweist, welche gleich der projizierten Fläche der Harzpulverpartikel ist, und den Durchmesser eines Kreises, welcher eine Fläche aufweist, welche gleich den projizierten Flächen der im Wesentlichen flachen Abschnitte der Harzpulverpartikel ist, welche einen flachen Abschnitt zeigen, wobei diese Partikel nachstehend als Pulver A bezeichnet werden, in einem projizierten Bild der Harzpulverpartikel, welches durch ein Rasterelektronenmikroskop erzielt wird,
ein Verhältnis Dy/Dn 0,50 bis 1,50, wobei Dn ein zahlenmittlerer Partikeldurchmesser der Harzpulverpartikel ist, und Dy einen Durchschnitt auf Zahlenmittelwertbasis von $Y_A$ darstellt, wobei jedes $Y_A$ der Durchmesser eines Kreises ist, welcher eine Fläche aufweist, welche gleich jeder projizierten Fläche des im Wesentlichen flachen Abschnitts von Partikeln von Pulver A ist, in einem projizierten Bild der Harzpulverpartikel, welches durch ein Rasterelektronenmikroskop erzielt wird.

2. Harzpulver nach Anspruch 1, wobei das Verhältnis Dy/Dn 0,70 bis 1,20 beträgt.

3. Harzpulver nach Anspruch 1 oder 2, wobei, in einer Verteilung des Durchmessers $Y_A$, ein integrierter Wert einer Anzahl der Pulver A-Partikel, welche einen Durchmesser $Y_A$ von 2,0 $\mu$m oder weniger aufweisen, 20,0 Prozent oder weniger einer Gesamtanzahl der Pulver A-Partikel beträgt.

4. Harzpulver nach Anspruch 1 oder 2, wobei, in einer Verteilung des Durchmessers $Y_A$, ein integrierter Wert einer Anzahl der Pulver A-Partikel, welche einen Durchmesser $Y_A$ von 2,0 $\mu$m oder weniger aufweisen, 10,0 Prozent oder weniger einer Gesamtanzahl der Pulver A-Partikel beträgt.

5. Harzpulver nach einem der Ansprüche 1 bis 4, wobei der zahlenmittlere Flächendurchmesser Dy 40,0 bis 100,0 $\mu$m beträgt.

**6.** Harzpulver nach einem der Ansprüche 1 bis 5, wobei der im Wesentlichen flache Abschnitt im Wesentlichen kreisförmig ist.

**7.** Harzpulver nach einem der Ansprüche 1 bis 6, wobei der im Wesentlichen flache Abschnitt eine Rundheit von 0,85 oder mehr aufweist.

**8.** Harzpulver nach einem der Ansprüche 1 bis 7, wobei die Pulver A-Partikel eine säulenartige Form aufweisen.

**9.** Harzpulver nach Anspruch 8, wobei die säulenartige Form eine Höhe von 5,0 bis 100,0 $\mu$m aufweist.

**10.** Harzpulver nach einem der Ansprüche 1 bis 9, wobei das für das Pulver A verwendete Harz mindestens ein Element umfasst, ausgewählt aus der Gruppe, bestehend aus Polybutylenterephthalat, Polyamid, Polyacetal und Polyetheretherketon.

**11.** Harzpulver nach einem der vorhergehenden Ansprüche, wobei die Proportion zwischen Pulver A und der Gesamt-Harzpulvermenge für das Festkörper-Freiformen 50 bis 100 Masseprozent beträgt.

**12.** System zum Herstellen eines festen Freiformobjekts, Folgendes umfassend:

das Harzpulver nach einem der Ansprüche 1 bis 11; und
eine Vorrichtung (1), Folgendes umfassend:

eine Aufnahmevorrichtung (11) zum Aufnehmen des Harzpulvers
eine Schichtformvorrichtung (12; 18) zum Formen einer Schicht, welche das Harzpulver umfasst; und
eine Schmelzvorrichtung (18) zum Schmelzen der Schicht mit elektromagnetischer Bestrahlung.

**13.** Verfahren zum Herstellen eines Festkörper-Freiformobjekts, Folgendes umfassend:

Formen einer Schicht, umfassend das Harzpulver nach einem der Ansprüche 1 bis 11; und
Schmelzen der Schicht durch elektromagnetische Bestrahlung.

**14.** Verfahren zum Herstellen eines Festkörper-Freiformobjekts nach Anspruch 13, ferner umfassend Wiederholen des Formens und des Schmelzens.

**15.** Verfahren zur Herstellung des Harzpulvers zum Festkörper-Freiformen nach einem der Ansprüche 1 bis 11, Folgendes umfassend:

Formen eines Materials, welches das Harzpulver bildet, zu faserigem Material;
Vereinigen des faserigen Materials, angeordnet in einer gleichen Richtung, zum Formen eines vereinigten Materials,
wobei das Vereinigen das Aufbringen von Hitze unter Druck umfasst; und
Schneiden des vereinigten Materials.

**Revendications**

**1.** Poudre de résine pour la fabrication de formes libres solides, comprenant :

des particules qui présentent une forme sensiblement cylindrique et un rapport Y/X compris entre 0,5 et 1,0, où X et Y représentent respectivement : le diamètre d'un cercle qui présente une surface qui est équivalente à la surface projetée des particules de poudre de résine, et le diamètre d'un cercle qui présente une surface qui est équivalente aux surfaces projetées des parties sensiblement planes des particules de poudre de résine présentant une partie plane, ces particules étant ci-après appelées poudre A, dans une image projetée des particules de poudre de résine qui est obtenue au moyen d'un microscope électronique à balayage ;
un rapport Dy/Dn qui est compris entre 0,50 et 1,50, dans laquelle Dn est un diamètre de particule moyen en nombre des particules de poudre de résine et Dy représente une moyenne sur la base nombre de $Y_A$, dans laquelle chaque $Y_A$ est le diamètre d'un cercle qui présente une surface qui est équivalente à chaque surface projetée de la partie sensiblement plane de particules de poudre A, dans une image projetée des particules de poudre de résine qui est obtenue au moyen d'un microscope électronique à balayage.

2. Poudre de résine selon la revendication 1, dans laquelle le rapport Dy/Dn est compris entre 0,70 et 1,20.

3. Poudre de résine selon la revendication 1 ou 2, dans laquelle, dans une distribution du diamètre $Y_A$, une valeur intégrée d'un nombre des particules de la poudre A présentant un diamètre $Y_A$ de 2,0 μm ou moins est de 20,0 pourcent ou moins d'un nombre total des particules de la poudre A.

4. Poudre de résine selon la revendication 1 ou 2, dans laquelle, dans une distribution du diamètre $Y_A$, une valeur intégrée d'un nombre des particules de la poudre A présentant un diamètre $Y_A$ de 2,0 μm ou moins est de 10,0 pourcent ou moins d'un nombre total des particules de la poudre A.

5. Poudre de résine selon l'une quelconque des revendications 1 à 4, dans laquelle le diamètre de surface moyen en nombre Dy est compris entre 40,0 et 100,0 μm.

6. Poudre de résine selon l'une quelconque des revendications 1 à 5, dans laquelle la partie sensiblement plane est sensiblement circulaire.

7. Poudre de résine selon l'une quelconque des revendications 1 à 6, dans laquelle la partie sensiblement plane présente une circularité de 0,85 ou plus.

8. Poudre de résine selon l'une quelconque des revendications 1 à 7, dans laquelle les particules de la poudre A présentent une forme colonnaire.

9. Poudre de résine selon la revendication 8, dans laquelle la forme colonnaire présente une hauteur qui est comprise entre 5,0 et 100,0 μm.

10. Poudre de résine selon l'une quelconque des revendications 1 à 9, dans laquelle la résine qui est utilisée pour la poudre A comprend au moins un élément qui est sélectionné parmi le groupe qui est constitué par le téréphtalate de polybutylène, le polyamide, le polyacétal et le polyéther éther cétone.

11. Poudre de résine selon l'une quelconque des revendications précédentes, dans laquelle la proportion de poudre A par rapport à la poudre de résine totale pour la fabrication de formes libres solides est comprise entre 50 % et 100 % en masse.

12. Système pour fabriquer un objet de fabrication à forme libre solide, comprenant
la poudre de résine selon l'une quelconque des revendications 1 à 11 ; et
un dispositif (1) comprenant :

    un dispositif de logement (11) pour loger la poudre de résine ;
    un dispositif de formation de couche (12 ; 18) pour former une couche qui comprend la poudre de résine ; et
    un dispositif de fusion (18) pour fondre la couche au moyen d'un rayonnement électromagnétique.

13. Procédé de fabrication d'un objet de fabrication à forme libre solide, comprenant :

    la formation d'une couche qui comprend la poudre de résine selon l'une quelconque des revendications 1 à 11 ; et
    la fusion de la couche au moyen d'une irradiation électromagnétique.

14. Procédé de fabrication d'un objet de fabrication à forme libre solide selon la revendication 13, comprenant en outre la répétition de la formation et de la fusion.

15. Procédé de fabrication de la poudre de résine pour la fabrication de forme libre solide selon l'une quelconque des revendications 1 à 11, comprenant :

    la formation d'un matériau constituant la poudre de résine en un matériau fibreux ;
    l'unification du matériau fibreux qui est disposé dans une même direction pour former un matériau unifié,
    dans lequel l'unification comprend l'application de chaleur sous pression ; et
    la découpe du matériau unifié.

# FIG. 1

150 × 66.6 μm   WD: 20.9 mm   1.7kV

# FIG. 2

# FIG. 3A

# FIG. 3B

# FIG. 3C

**FIG. 3D**

**FIG. 3E**

**FIG. 3F**

**FIG. 3G**

**FIG. 3H**

**FIG. 3I**

# FIG. 4

1

18  L  19  13H  11H

11H  11  12  13  P  11

11P  13P  11P

# FIG. 5A

# FIG. 5B

# FIG. 6A

# FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017112723 A1
- US 2009190959 A1

- US 6531086 B